# EUROPÄISCHE PATENTSCHRIFT

(11) **EP 2 664 049 B1**
(45) Veröffentlichungstag und Bekanntmachung des Hinweises auf die Patenterteilung: **18.10.2017**
(21) Anmeldenummer: 12708687.4
(22) Anmeldetag: 06.01.2012
(51) Int. Cl.: F03D 9/25, H02J 3/46, F03B 13/00, H02J 3/38, F03D 9/00, H02M 7/00

(54) **ANORDNUNG ZUR EINSPEISUNG ELEKTRISCHER ENERGIE IN EIN ENERGIEVERSORGUNGSNETZ**
ASSEMBLY FOR FEEDING ELECTRICAL ENERGY INTO AN ENERGY SUPPLY NETWORK
DISPOSITIF D'ALIMENTATION EN ÉNERGIE ÉLECTRIQUE D'UN RÉSEAU D'ALIMENTATION EN ÉNERGIE

(30) Priorität: 12.01.2011 EP 11150695
(43) Veröffentlichungstag der Anmeldung: 20.11.2013
(73) Patentinhaber: Venpower GmbH, 16835 Rüthnick (DE)
(72) Erfinder: EICHERT, Christian, 10405 Berlin (DE); KOLB, Stefan, 10317 Berlin (DE)
(74) Vertreter: Fischer, Uwe
(86) Internationale Anmeldenummer: PCT/EP2012/050171
(87) Internationale Veröffentlichungsnummer: WO 2012/095364

(56) Entgegenhaltungen:
- EP-A2- 1 561 945
- WO-A-2009/003959
- WO-A2-2006/120033
- DE-A1- 19 845 903
- US-A- 5 083 039

## Beschreibung

Die Erfindung bezieht sich auf eine Anordnung mit den Merkmalen gemäß dem Oberbegriff des Patentanspruchs 1.

Eine derartige Anordnung ist aus der internationalen Patentanmeldung WO 2009/003959 A1 bekannt. In dieser Patentanmeldung ist eine Wechselrichteranordnung mit einem Gleichspannungsanschluss, an den eine Gleichspannung anlegbar ist, einem Lastanschluss zum Anschluss einer Last, mehreren parallel geschalteten Wechselrichtern, deren Eingänge gemeinsam mit dem Gleichspannungsanschluss und deren Ausgänge über eine oder mehrere Induktivitäten gemeinsam mit dem Lastanschluss gekoppelt sind, und einer Steuerungseinrichtung zur Steuerung der Wechselrichter in Abhängigkeit eines Vorgabevektors einer übergeordneten Steuerungs- oder Regelungseinheit beschrieben. Die Steuerungseinrichtung ist ausgebildet, die Wechselrichter derart anzusteuern, dass die Ausgangsspannung am Lastanschluss in Abhängigkeit vom Vorgabevektor einer übergeordneten Steuerungs- oder Regelungseinheit einen bestimmten Zustand aus einer Anzahl von unterschiedlichen Zuständen einnimmt, wobei wenigstens einige Zustände der Ausgangsspannung durch eine Anzahl verschiedener Kombinationen von Betriebszuständen der Wechselrichter erzielbar sind und die Steuerungseinrichtung für jeden Zustand der Ausgangsspannung diejenige Kombination von Betriebszuständen der Wechselrichter aus der Anzahl der verschiedenen Kombinationen auswählt, bei welcher ein gewünschtes Kriterium möglichst optimal erfüllt ist. Außerdem ist die Steuerungseinrichtung derart ausgeführt, dass die einzelnen Wechselrichter mit unterschiedlichen Potentialstellbefehlen versorgt werden können um mehr als zwei Level in der Ausgangsspannung zu erzeugen. US5083039 offenbart eine Anordnung zur Einspeisung elektrischer Energie in ein Energieversorgungsnetz, wobei die Anordnung einen Generator und Frequenzumrichter aufweist. Der Erfindung liegt die Aufgabe zugrunde, eine Anordnung zur Einspeisung elektrischer Energie in ein Energieversorgungsnetz anzugeben, wobei die Anordnung bessere elektrische Eigenschaften als vorbekannte Anordnungen dieser Art aufweisen soll.
Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.
Danach ist erfindungsgemäß vorgesehen, dass die Anordnung einen Generator mit potentialgetrennten Wicklungssystemen aufweist, die Anordnung zumindest zwei Frequenzumrichter mit getrennten Zwischenkreisen aufweist, wobei jeder Frequenzumrichter mittel- oder unmittelbar an ein Wicklungssystem des Generators angeschlossen ist, und die Anordnung zumindest eine Steuerungseinrichtung aufweist, an die die Frequenzumrichter zu deren Ansteuerung angeschlossen sind, wobei die Frequenzumrichter bei Ansteuerung durch die Steuerungseinrichtung den Strom mittels einer Spannung mit Multilevelcharakteristik in das Energieversorgungsnetz einspeisen.
Ein wesentlicher Vorteil der erfindungsgemäßen Anordnung besteht darin, dass die Frequenzumrichter - im Unterschied beispielsweise zu der eingangs beschriebenen, aus der internationalen Patentanmeldung WO 2009/003959 A1 vorbekannten Anordnung - nicht einen gemeinsamen Zwischenkreis als Energiespeicher haben, sondern dass stattdessen jeder Frequenzumrichter seinen eigenen Zwischenkreis besitzt, wobei die Zwischenkreise voneinander potentialmäßig getrennt sind. Durch diese Potentialtrennung lässt sich vermeiden, dass in den Zwischenkreisen sowie in den Frequenzumrichtern unerwünschte Kreisströme auftreten; dennoch bleibt eine Multilevelansteuerung, wie sie bei der eingangs beschriebenen vorbekannten Anordnung erfolgt, möglich.

Gemäß der Erfindung ist vorgesehen, dass die zumindest zwei Frequenzumrichter jeweils eine Teilspannung erzeugen und die Spannung mit Multilevelcharakteristik mit den Teilspannungen der zumindest zwei Frequenzumrichter gebildet wird.

Die Spannung mit Multilevelcharakteristik wird mit den Teilspannungen der zumindest zwei Frequenzumrichter durch oder unter Einbeziehung einer Zeigeraddition von Spannungszeigern gebildet.
Bevorzugt wird die Spannung mit Multilevelcharakteristik durch oder unter Einbeziehung einer Zeigeraddition der Spannungszeiger der Teilspannungen gebildet. Alternativ kann die Spannung mit Multilevelcharakteristik durch oder unter Einbeziehung einer Zeigeraddition von Spannungszeigern, die zu den Spannungszeigern der Teilspannungen proportional sind, gebildet werden.
Die Steuerungseinrichtung steuert die Frequenzumrichter bevorzugt derart an, dass die Spannung mit Multilevelcharakteristik, die mit den Teilspannungen der Frequenzumrichter gebildet wird, der Netzspannung des Energieversorgungsnetzes bestmöglich oder zumindest annähernd entspricht.

Besonders bevorzugt steuert die Steuerungseinrichtung die Frequenzumrichter derart an, dass die Spannung mit Multilevelcharakteristik von der Netzspannung in dem Maße abweicht, dass eine gewünschte Wirk- und Blindleistungseinspeisung in das Energieversorgungsnetz erfolgt.

Die Steuerungseinrichtung bestimmt vorzugsweise die Schaltzustände der einzelnen Frequenzumrichter.

Besonders bevorzugt bestimmt die Steuerungseinrichtung die Schaltzustände der einzelnen Frequenzumrichter mit Hilfe eines Multilevel PWM(Pulsweitenmodulation)-Modulators mit mindestens drei Leveln.

Die für die Einprägung der Netzströme in den einzelnen Phasen am Netzanschlusspunkt wirksamen Potentiale werden vorzugsweise bestimmt durch den Mittelwert der Potentiale, die an den netzseitigen Phasenanschlüssen der jeweiligen Phase der zumindest zwei Frequenzumrichter anliegen. Dieser Mittelwert kann beispielsweise durch vorhandene unsymmetrische Impedanzen, zum Beispiel Drosseln unterschiedlicher Induktivität, zwischen den netzseitigen Phasenanschlüssen der Frequenzumrichter und dem Kopplungspunkt der zumindest zwei Frequenzumrichter gewichtet werden. Für den zeitlichen Momentanwert des Mittelwerts gibt es dann eine gemäß der Anzahl der Frequenzumrichter und der Art der mittelbaren Verkopplung endliche Anzahl von Werten.

Mit der Multilevelansteuerung erfolgt also vorzugsweise eine gezielte Auswahl der Ausgangszustände der mindestens zwei Frequenzumrichter, wobei der Ausgangszustand eines Frequenzumrichters das an den einzelnen Phasenausgängen des Frequenzumrichters anliegende Potential bestimmt. "Gezielt" bedeutet in diesem Zusammenhang insbesondere, dass das in einer Phase für die Einprägung des Netzstromes in dieser Phase wirksame Potential durch den zeitlichen Mittelwert des nächstmöglich kleineren und nächstmöglich größeren Potentials gestellt wird.

Die Steuerungseinrichtung realisiert vorzugsweise zumindest für die Netzseite eine Multilevelansteuerung. Die Sollwerte für die zu realisierenden für die Einprägung der Netzströme in den jeweiligen Phasen wirksamen Potentiale werden entweder in der Steuerungseinrichtung selbst oder von einer übergeordneten Steuerung erzeugt. Dabei kann es sich zum Beispiel um die Ausgänge eines feldorientierten Reglers handeln.

Potentialmäßig getrennte Zwischenkreise sind beispielsweise solche, die nicht unmittelbar miteinander verbunden sind, und/oder solche, bei denen ohne Schalthandlung der netzseitigen Wechselrichter kein Potentialausgleich zwischen den Zwischenkreisen stattfinden kann.

Die Frequenzumrichter sind auf der Energieversorgungsnetzseite in den einzelnen Phasen vorzugsweise mittelbar parallel geschaltet.

Potentialmäßig getrennte Zwischenkreise können beispielsweise durch potentialmäßig getrennte Generatoren gebildet werden. Alternativ ist es möglich, potentialmäßig getrennte Zwischenkreise durch einen einzigen Generator zu bilden, der potentialmäßig getrennte Wicklungen aufweist. Bei den Zwischenkreisen handelt es sich vorzugsweise um Gleisspannungszwischenkreise.

Gemäß einer besonders vorteilhaften Ausgestaltung ist vorgesehen, dass die zumindest zwei Frequenzumrichter jeweils einen Gleichrichter, einen Gleichspannungszwischenkreis und einen Wechselrichter aufweisen, die Gleichrichter und die Gleichspannungszwischenkreise der zumindest zwei Frequenzumrichter elektrisch voneinander getrennt sind und die Steuerungseinrichtung mit den Wechselrichtern der Frequenzumrichter verbunden ist.

Die Gleichrichter und die Wechselrichter sind vorzugsweise mehrphasige bzw. mehrphasig arbeitende Komponenten, beispielsweise drei- oder vierphasige Komponenten. Unter einem mehrphasigen Gleichrichter ist in diesem Zusammenhang ein Gleichrichter zu verstehen, der eine mehrphasige Wechselspannung (z. B. Drehstromspannung) in eine Gleichspannung umwandeln kann. Unter einem mehrphasigen Wechselrichter ist ein Wechselrichter zu verstehen, der eine Gleichspannung in eine mehrphasige Wechselspannung umwandeln kann.

Die Gleichrichter und die Wechselrichter können die Energie vorzugsweise in beide Richtungen transportieren, also sowohl in Richtung Energieversorgungsnetz als auch umgekehrt. Im letztgenannten Falle arbeiten die Gleichrichter - in Energieflussrichtung gesehen - als Wechselrichter und die Wechselrichter als Gleichrichter.

Die Wechselrichter und die im Falle einer inversen Energieflussrichtung als Wechselrichter arbeitenden Gleichrichter sind vorzugsweise derart ausgestaltet, dass sie die Phasenlage zwischen der ausgangsseitig erzeugten Spannung und dem ausgangsseitig gelieferten Strom beliebig, zumindest nahezu beliebig einstellen können. Hierzu weisen die Komponenten vorzugsweise entsprechende Steuersignaleingänge zum Einstellen der Phasenlage auf.

Die Gleichrichter und/oder die Wechselrichter können aktive Komponenten enthalten, beispielsweise Halbleiterschalter, oder alternativ auch passiv arbeiten (z. B. mittels Dioden).

Die Steuerungseinrichtung kann einem Frequenzumrichter zugeordnet sein; alternativ, und dies wird als vorteilhaft angesehen, kann die Steuerungseinrichtung auf mehrere (zumindest zwei) oder alle Frequenzumrichter verteilt sein.

Auch wird es als vorteilhaft angesehen, wenn die Steuerungseinrichtung derart ausgestaltet ist, dass sie die Frequenzumrichter mit individuellen pulsweitenmodulierten Steuersignalen ansteuert.

Vorzugsweise ist die Steuerungseinrichtung derart ausgestaltet, dass sie Steuersignale für die Frequenzumrichter mit einem Raumzeigerverfahren erzeugt.

Auch wird es als vorteilhaft angesehen, wenn die Steuerungseinrichtung derart ausgestaltet ist, dass sie Steuersignale für die Frequenzumrichter mit einem trägerbasierten Verfahren erzeugt. Vorzugsweise wird die Steuerungseinrichtung die Steuersignale für die Frequenzumrichter derart erzeugen, dass die Trägersignale zur Erzeugung der Multilevelspannung keine Phasenverschiebung aufweisen.

Auch kann die Steuerungseinrichtung derart ausgestaltet sein, dass sie Steuersignale für die Frequenzumrichter mit einem Sinus-Dreieck-Verfahren erzeugt.

Die Frequenzumrichter sind vorzugsweise netzseitig induktiv entkoppelt. Die Frequenzumrichter können netzseitig beispielsweise mit Drosseln verbunden sein.

Auch können die Frequenzumrichter netzseitig beispielsweise an einen Netztransformator angeschlossen werden, der zumindest zwei voneinander potentialgetrennte sekundärseitige Wicklungssysteme besitzt, wobei die mindestens zwei Frequenzumrichter an verschiedene der zumindest zwei voneinander potentialgetrennten sekundärseitigen Wicklungssysteme angeschlossen werden.

Die Steuerungseinrichtung ist vorzugsweise darüber hinaus derart ausgestaltet, dass sie die in den Frequenzumrichtern auftretenden elektrischen Verluste gleich, zumindest annähernd gleich, auf die Frequenzumrichter aufteilt.

Auch kann die Steuerungseinrichtung derart ausgestaltet sein, dass sie Kreisströme, die trotz Potentialtrennung zwischen den Frequenzumrichtern auftreten, gezielt regelt.

Die Anordnung bildet vorzugsweise eine Wind- oder Wasserenergieanlage zum Erzeugen elektrischer Energie und weist vorzugsweise mindestens einen Propeller auf, der mit dem Generator in Verbindung steht.

Der Generator kann beispielsweise einen Rotor und einen Stator umfassen, wobei der Stator mindestens zwei elektrisch voneinander unabhängige Statormodule aufweist, die jeweils mit dem Rotor zusammenwirken, wobei jedes der Statormodule jeweils mindestens einen moduleigenen Magneten und mindestens eine Wicklung, die von zumindest einem Teil des magnetischen Flusses des Magneten durchflossen wird, umfasst und jedes der Statormodule mit dem Rotor jeweils einen moduleigenen Magnetkreis bildet, wobei im Falle einer Relativbewegung zwischen Rotor und Stator jedes Statormodul eine moduleigene Ausgangsspannung erzeugt, wobei die Wicklungen der Statormodule potentialfrei und voneinander potentialgetrennt sind und wobei die zumindest zwei Frequenzumrichter generatorseitig mittelbar oder unmittelbar an die potentialfreien und voneinander potentialgetrennten Wicklungen der Statormodule angeschlossen sind.

Im Übrigen wird es als vorteilhaft angesehen, wenn alle Frequenzumrichter bzw. die in den Frequenzumrichtern enthaltenen Schalter möglichst gleichmäßig elektrisch belastet werden. Handelt es sich um identische Schalter innerhalb der Frequenzumrichter, so sollten diese im zeitlichen Mittel gleichbetrieben werden. Handelt es sich um unterschiedlich belastbare Schalter innerhalb der Frequenzumrichter, so sollte die Lastverteilung unter Berücksichtigung der individuellen Belastbarkeit optimiert werden.

Im Übrigen ist es auch möglich, die Temperatur der Schalter innerhalb der Frequenzumrichter zu messen und den Betrieb der Schalter dahingehend zu optimieren, dass von der Steuerungseinrichtung alle Schalter mit möglichst gleicher Betriebstemperatur betrieben werden.

Die oben beschriebenen Anordnungen ermöglichen es, eine Vielzahl an Frequenzumrichtern vorzusehen, um ausgangsseitig eine Vielzahl unterschiedlicher Spannungslevel zu erzeugen. Je mehr Spannungslevel zur Verfügung stehen, umso besser lässt sich das Ausgangssignal der Frequenzumrichter an einen sinusförmigen Verlauf mit beispielsweise 50 Hz oder 60 Hz Grundfrequenz anpassen. Dies soll nachfolgend kurz verdeutlicht werden: Werden zwei Frequenzumrichter verwendet und werden die Frequenzumrichter beispielsweise mit einer Schaltfrequenz von einem 1 kHz betrieben, so wird eine Störfrequenz bei 2 kHz erzeugt werden, die mittels nachgeordneter Filter weggefiltert werden muss. Werden hingegen mehr als zwei Frequenzumrichter eingesetzt, so verschiebt sich die Störfrequenz zu einem Vielfachen der Schaltfrequenz von einem 1 kHz. Werden beispielsweise 6 Frequenzumrichter eingesetzt, so liegt die Störfrequenz bei ca. 6 kHz; durch das Ansteigen der Störfrequenz wird das Wegfiltern vereinfacht, und es können kleinere und billigere Filter eingesetzt werden. Mit anderen Worten besteht ein interessanter Aspekt der oben beschriebenen Anordnungen also darin, dass durch den Einsatz mehrerer Frequenzumrichter die Störfrequenzen zu höheren Frequenzen hin verschoben werden können, um den Einsatz einfacherer und billigerer Filter zu ermöglichen.

Als vorteilhaft wird demgemäß auch eine Anordnung mit einer Steuerungseinrichtung angesehen, die zur Durchführung eines Multilevelmodulationsverfahrens geeignet ist, wobei die Anordnung zumindest zwei Frequenzumrichter und einen Generator mit Wicklungen aufweist, die Steuerungseinrichtung an die Frequenzumrichter zu deren Ansteuerung angeschlossen ist, die Frequenzumrichter ausgangsseitig derart miteinander verschaltet sind, dass sie bei Ansteuerung durch die Steuerungseinrichtung ausgangsseitig eine in ein Energieversorgungssystem einspeisbare Multilevelausgangsspannung erzeugen, und die Frequenzumrichter eingangsseitig elektrisch voneinander getrennt sind und von Wicklungen des Generators gespeist werden, die potentialfrei und voneinander potentialgetrennt sind.

Die Erfindung wird nachfolgend anhand von Ausführungsbeispielen näher erläutert; dabei zeigen beispielhaft
- Figur 1: ein erstes Ausführungsbeispiel für eine erfindungsgemäße Anordnung mit einem Generator und Drosseln,
- Figur 2: ein zweites Ausführungsbeispiel für eine erfindungsgemäße Anordnung mit einem mehrere Generatoreinheiten aufweisenden Generator und Drosseln,
- Figur 3: ein drittes Ausführungsbeispiel für eine erfindungsgemäße Anordnung mit einem Generator und einem Netztransformator, der mehrere voneinander potentialgetrennte sekundärseitige Wicklungssysteme besitzt, und
- Figur 4: ein viertes Ausführungsbeispiel für eine erfindungsgemäße Anordnung mit einem mehrere Generatoreinheiten aufweisenden Generator und einem Netztransformator, der mehrere voneinander potentialgetrennte sekundärseitige Wicklungssysteme besitzt.

In den Figuren werden der Übersicht halber für identische oder vergleichbare Komponenten stets dieselben Bezugszeichen verwendet.

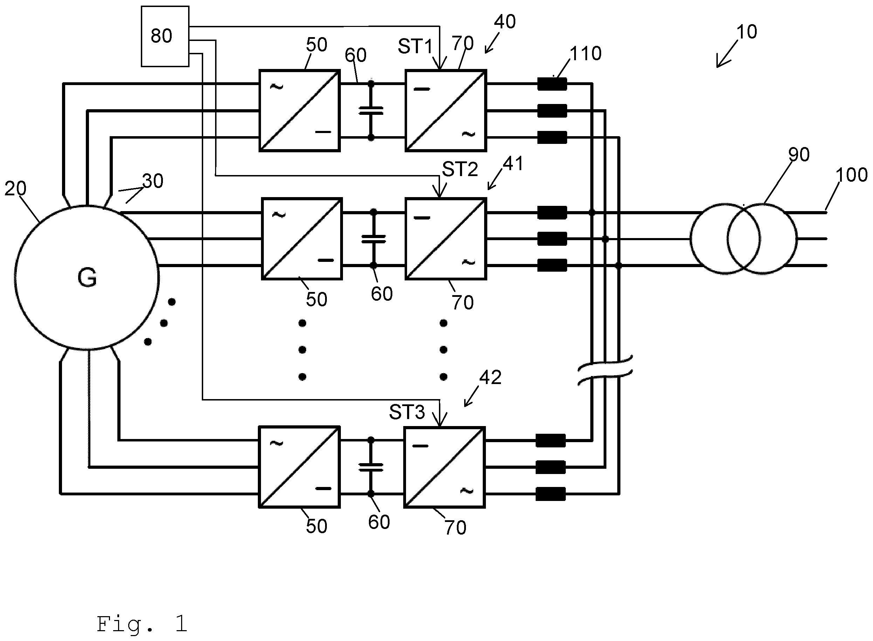

In der Figur 1 erkennt man eine Anordnung 10 mit einem Generator 20, der eine Vielzahl an potentialgetrennten Wicklungssystemen 30 aufweist. An jedes dieser Wicklungssysteme 30 ist jeweils mittel- oder unmittelbar ein Frequenzumrichter 40, 41, und 42 angeschlossen.

Die Frequenzumrichter 40, 41, und 42 umfassen jeweils einen Gleichrichter 50, einen Gleichspannungszwischenkreis 60 und einen Wechselrichter 70. Die Gleichrichter 50 und die Gleichspannungszwischenkreise 60 der Frequenzumrichter sind elektrisch voneinander getrennt.

In der Figur 1 lässt sich außerdem erkennen, dass die Frequenzumrichter auf der Energieversorgungsnetzseite in den einzelnen Phasen mittelbar parallel geschaltet sind.

An die Wechselrichter 70 der Frequenzumrichter 40, 41 und 42 ist eine Steuerungseinrichtung 80 angeschlossen, die die Wechselrichter 70 mit individuellen Steuersignalen ST1 bis ST3 ansteuert. Die Ansteuerung durch die Steuersignale ST1 bis ST3 führt dazu, dass die Wechselrichter 70 gemeinsam eine Spannung mit Multilevelcharakteristik erzeugen und diese in den Transformator 90 und damit in das nachgeordnete Energieversorgungsnetz 100 einspeisen.

Die Steuerungseinrichtung 80 wird die Wechselrichter 70 vorzugsweise mit individuellen pulsweitenmodulierten Steuersignalen ST ansteuern; die Steuersignale ST1 bis ST3 kann die Steuerungseinrichtung 80 beispielsweise nach einem Raumzeigerverfahren oder einem Sinus-Dreieck-Verfahren erzeugen (vgl. internationale Patentanmeldung WO 2009/003959 A1). Vorzugsweise wird die Steuerungseinrichtung 80 die Steuersignale mit einem trägerbasierten Verfahren erzeugen, wobei die mit dem trägerbasierten Verfahren erzeugten Trägersignale zwecks Erzeugung der Multilevelspannung vorzugsweise phasenverschiebungsfrei sind.

Bei dem Ausführungsbeispiel gemäß der Figur 1 sind die Frequenzumrichter 40, 41 und 42 netzseitig mit Drosseln 110 verbunden und dadurch induktiv entkoppelt. Die Drosseln 110 sind elektrisch zwischen die Frequenzumrichter 40, 41 und 42 und den Transformator 90 geschaltet.

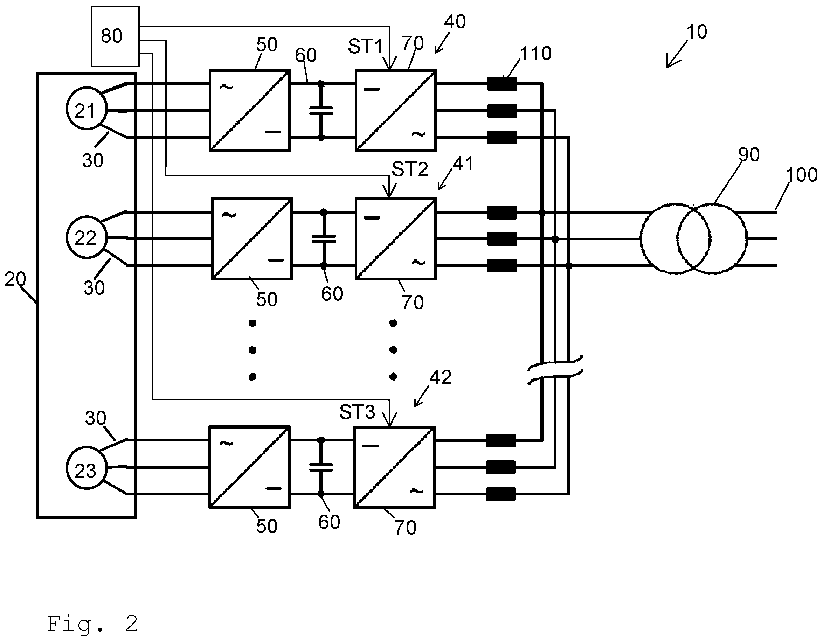

Die Figur 2 zeigt ein zweites Ausführungsbeispiel für eine Anordnung 10 zur Einspeisung elektrischer Energie in das Energieversorgungsnetz 100. Bei diesem zweiten Ausführungsbeispiel ist der Generator 20 durch eine Vielzahl an vorzugsweise selbstständigen Generatoreinheiten 21, 22 und 23 gebildet, die voneinander potentialgetrennte Wicklungssysteme 30 aufweisen. Im Übrigen entspricht das zweite Ausführungsbeispiel dem ersten Ausführungsbeispiel.

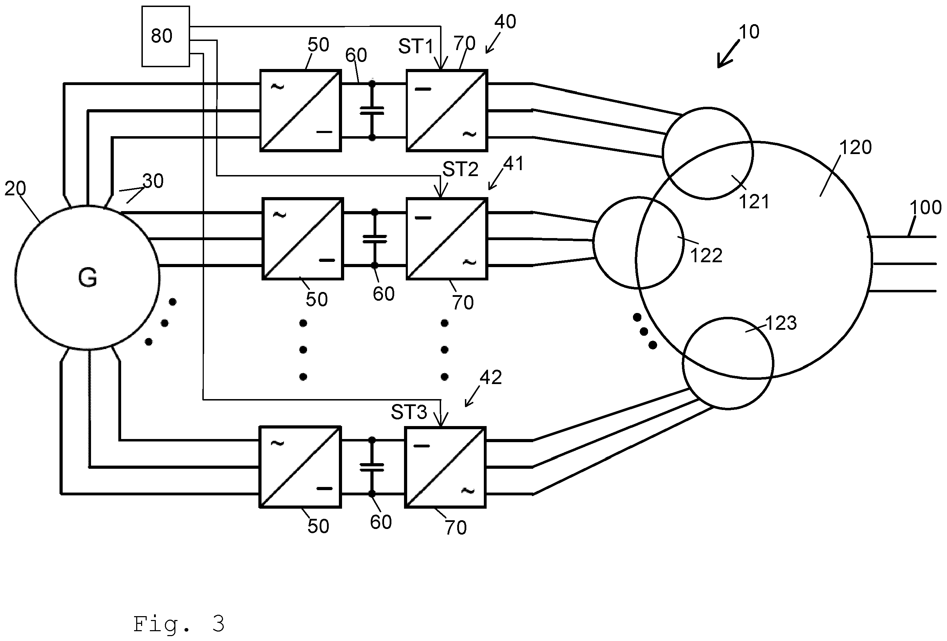

Die Figur 3 zeigt ein drittes Ausführungsbeispiel für eine Anordnung 10 zur Einspeisung elektrischer Energie in das Energieversorgungsnetz 100. Bei diesem dritten Ausführungsbeispiel ist zur induktiven Entkopplung anstelle der Drosseln 110 (vgl. Figuren 1 und 2) ein Netztransformator 120 vorgesehen. Der Netztransformator 120 weist eine Vielzahl an zueinander potentialgetrennten sekundärseitigen Wicklungssystemen 121, 122 und 123 auf. Die Frequenzumrichter 40, 41 und 42 sind zur induktiven Entkopplung dabei jeweils an ein individuelles sekundärseitiges Wicklungssystem 121, 122 und 123 angeschlossen. Im Übrigen entspricht das dritte Ausführungsbeispiel dem ersten Ausführungsbeispiel.

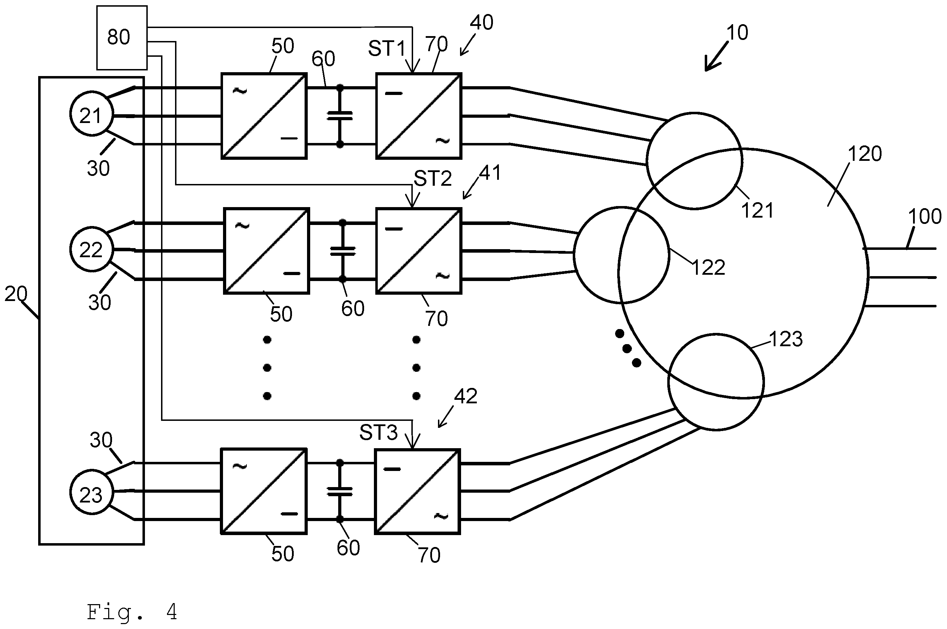

Die Figur 4 zeigt ein viertes Ausführungsbeispiel für eine Anordnung 10 zur Einspeisung elektrischer Energie in das Energieversorgungsnetz 100. Bei diesem vierten Ausführungsbeispiel ist zur induktiven Entkopplung anstelle der Drosseln 110 (vgl. Figuren 1 und 2) ein Netztransformator 120 vorgesehen, wie er im Zusammenhang mit der Figur 3 beschrieben worden ist. Der Generator 20 ist durch eine Vielzahl an vorzugsweise selbstständigen Generatoreinheiten 21, 22 und 23 gebildet, wie sie im Zusammenhang mit der Figur 2 beschrieben worden sind. Im Übrigen entspricht das vierte Ausführungsbeispiel dem ersten Ausführungsbeispiel.

### Bezugszeichen

- 10: Anordnung
- 20: Generator
- 30: potentialgetrennte Wicklungssysteme
- 40: Frequenzumrichter
- 41: Frequenzumrichter
- 42: Frequenzumrichter
- 50: Gleichrichter
- 60: Gleichspannungszwischenkreis
- 70: Wechselrichter
- 80: Steuerungseinrichtung
- 90: Transformator
- 100: Energieversorgungsnetz
- 110: Drossel
- 120: Netztransformator
- 121: potentialgetrenntes, sekundärseitiges Wicklungssystem
- 122: potentialgetrenntes, sekundärseitiges Wicklungssystem
- 123: potentialgetrenntes, sekundärseitiges Wicklungssystem

- ST1: Steuersignal
- ST2: Steuersignal
- ST3: Steuersignal

## Patentansprüche

1. Anordnung (10) zur Einspeisung elektrischer Energie in ein Energieversorgungsnetz (100), wobei
- die Anordnung einen Generator (20) mit potentialgetrennten Wicklungssystemen (30) aufweist,
- die Anordnung zumindest zwei Frequenzumrichter (40, 41, 42) mit getrennten Zwischenkreisen (60) aufweist, wobei jeder Frequenzumrichter mittel- oder unmittelbar an ein Wicklungssystem (30) des Generators angeschlossen ist,
- die Anordnung zumindest eine Steuerungseinrichtung (80) aufweist, an die die Frequenzumrichter zu deren Ansteuerung angeschlossen sind, und
- die Frequenzumrichter bei Ansteuerung durch die Steuerungseinrichtung Strom mittels einer Spannung mit Multilevelcharakteristik in das Energieversorgungsnetz (100) einspeisen,
- wobei die zumindest zwei Frequenzumrichter (40, 41, 42) jeweils eine Teilspannung erzeugen und
- wobei die Spannung mit Multilevelcharakteristik mit den Teilspannungen der zumindest zwei Frequenzumrichter gebildet wird.

2. Anordnung nach Anspruch 1,
**dadurch gekennzeichnet, dass**
- die Spannung mit Multilevelcharakteristik mit den Teilspannungen der zumindest zwei Frequenzumrichter durch oder unter Einbeziehung einer Zeigeraddition von Spannungszeigern der Teilspannungen oder von Spannungszeigern, die zu den Spannungszeigern der Teilspannungen proportional sind, gebildet wird.

3. Anordnung nach einem der voranstehenden Ansprüche,
**dadurch gekennzeichnet, dass**
die Steuerungseinrichtung die Frequenzumrichter derart ansteuert, dass die Spannung mit Multilevelcharakteristik, die mit den Teilspannungen der Frequenzumrichter gebildet wird, der Netzspannung des Energieversorgungsnetzes (100) bestmöglich oder zumindest annähernd entspricht.

4. Anordnung nach Anspruch 3,
**dadurch gekennzeichnet, dass**
die Spannung mit Multilevelcharakteristik von der Netzspannung in dem Maße abweicht, dass eine gewünschte Wirk- und Blindleistungseinspeisung in das Energieversorgungsnetz erfolgt.

5. Anordnung nach einem der vorangegangenen Ansprüche,
**dadurch gekennzeichnet, dass**
die Steuerungseinrichtung die Schaltzustände der einzelnen Frequenzumrichter bestimmt.

6. Anordnung nach Anspruch 5,
**dadurch gekennzeichnet, dass**
die Steuerungseinrichtung die Schaltzustände der einzelnen Frequenzumrichter mit Hilfe eines Multilevel PWM Modulators mit mindestens drei Leveln bestimmt.

7. Anordnung nach einem der voranstehenden Ansprüche,
**dadurch gekennzeichnet, dass**
- die zumindest zwei Frequenzumrichter jeweils einen Gleichrichter (50), einen Gleichspannungszwischenkreis (60) und einen Wechselrichter (70) aufweisen,
- die Gleichrichter und die Gleichspannungszwischenkreise der zumindest zwei Frequenzumrichter elektrisch voneinander getrennt sind und
- die Steuerungseinrichtung mit den Wechselrichtern der Frequenzumrichter verbunden ist.

8. Anordnung nach einem der voranstehenden Ansprüche,
**dadurch gekennzeichnet, dass**
die Steuerungseinrichtung derart ausgestaltet ist, dass sie die Frequenzumrichter mit individuellen pulsweitenmodulierten Steuersignalen ansteuert.

9. Anordnung nach einem der voranstehenden Ansprüche,
**dadurch gekennzeichnet, dass**
die Steuerungseinrichtung derart ausgestaltet ist, dass sie Steuersignale für die Frequenzumrichter mit einem Raumzeigerverfahren oder mit einem trägerbasierten Verfahren erzeugt.

10. Anordnung nach Anspruch 9,
**dadurch gekennzeichnet, dass**
die Steuerungseinrichtung derart ausgeführt ist, dass sie mit dem trägerbasierten Verfahren Trägersignale erzeugt, die zur Erzeugung der Multilevelspannung keine Phasenverschiebung aufweisen.

11. Anordnung nach einem der voranstehenden Ansprüche,
**dadurch gekennzeichnet, dass**
die Steuerungseinrichtung derart ausgestaltet ist, dass sie Steuersignale für die Frequenzumrichter mit einem Sinus-Dreieck-Verfahren erzeugt.

12. Anordnung nach einem der voranstehenden Ansprüche,
**dadurch gekennzeichnet, dass**
die Frequenzumrichter netzseitig an einen Netztransformator (120) angeschlossen sind, der zumindest zwei voneinander potentialgetrennte sekundärseitige Wicklungssysteme (121, 122, 123) besitzt, wobei die mindestens zwei Frequenzumrichter an verschiedene der zumindest zwei voneinander potentialgetrennten sekundärseitigen Wicklungssysteme angeschlossen sind.

13. Anordnung nach einem der voranstehenden Ansprüche,
**dadurch gekennzeichnet dass**
die Steuerungseinrichtung derart ausgestaltet ist, dass sie die in den Frequenzumrichtern auftretenden elektrischen Verluste gleich, zumindest annähernd gleich, auf die Frequenzumrichter aufteilt.

14. Anordnung nach einem der voranstehenden Ansprüche,
**dadurch gekennzeichnet, dass**
die Steuerungseinrichtung derart ausgestaltet ist, dass sie die Kreisströme, die zwischen den Frequenzumrichtern auftreten, regelt.

15. Anordnung nach einem der voranstehenden Ansprüche,
**dadurch gekennzeichnet dass**
der Generator einen Rotor und einen Stator umfasst,
- wobei der Stator mindestens zwei elektrisch voneinander unabhängige Statormodule aufweist, die jeweils mit dem Rotor zusammenwirken,
- wobei jedes der Statormodule jeweils mindestens einen moduleigenen Magneten und mindestens eine Wicklung, die von zumindest einem Teil des magnetischen Flusses des Magneten durchflossen wird, umfasst und jedes der Statormodule mit dem Rotor jeweils einen moduleigenen Magnetkreis bildet,
- wobei im Falle einer Relativbewegung zwischen Rotor und Stator jedes Statormodul eine moduleigene Ausgangsspannung erzeugt,
- wobei die Wicklungen der Statormodule potentialfrei und voneinander potentialgetrennt sind und
- wobei die zumindest zwei Frequenzumrichter generatorseitig mittelbar oder unmittelbar an die potentialfreien und voneinander potentialgetrennten Wicklungen der Statormodule angeschlossen sind.

## Claims

1. Arrangement (10) for feeding electrical energy into an energy supply system (100),
wherein
the arrangement has a generator (20) with electrically isolated winding systems (30),
the arrangement has at least two frequency converters (40, 41, 42) with isolated intermediate circuits (60), wherein each frequency converter is connected directly or indirectly to a winding system (30) of the generator,
the arrangement has at least one control device (80), to which the frequency converters are connected for actuation thereof, and
the frequency converters, on actuation by the control device, feed current by means of a voltage with a multi-level characteristic into the energy supply system (100),
- wherein the at least two frequency converters (40, 41, 42) each generate a partial voltage, and
- wherein the voltage with the multi-level characteristic is formed by the partial voltages of the at least two frequency converters.

2. Arrangement according to Claim 1,
**characterized in that**
- the voltage with the multi-level characteristic is formed by the partial voltages of the at least two frequency converters by or incorporating phasor addition of voltage phasors of the partial voltages or of voltage phasors which are proportional to the voltage phasors of the partial voltages.

3. Arrangement according to one of the preceding claims,
**characterized in that**
the control device actuates the frequency converters in such a way that the voltage with the multi-level characteristic which is formed by the partial voltages of the frequency converters has the best possible correspondence or at least approximately corresponds to the system voltage of the energy supply system (100).

4. Arrangement according to Claim 3,
**characterized in that**
the voltage with the multi-level characteristic deviates from the system voltage to the extent that a desired active and reactive power feed into the energy supply system takes place.

5. Arrangement according to one of the preceding claims,
**characterized in that**
the control device determines the switching states of the individual frequency converters.

6. Arrangement according to Claim 5,
**characterized in that**
the control device determines the switching states of the individual frequency converters with the aid of a multi-level PWM modulator with at least three levels.

7. Arrangement according to one of the preceding claims,
**characterized in that**
the at least two frequency converters each have a rectifier (50), a DC voltage intermediate circuit (60) and an inverter (70),
the rectifiers and the DC voltage intermediate circuits of the at least two frequency converters are electrically isolated from one another, and
the control device is connected to the inverters of the frequency converters.

8. Arrangement according to one of the preceding claims,
**characterized in that**
the control device is configured in such a way that it actuates the frequency converters with individual pulse-width-modulated control signals.

9. Arrangement according to one of the preceding claims,
**characterized in that**
the control device is configured in such a way that it generates control signals for the frequency converters using a space vector method or using a carrier-based method.

10. Arrangement according to Claim 9,
**characterized in that**
the control device is embodied in such a way that, using the carrier-based method, it generates carrier signals which do not have a phase shift for generating the multi-level voltage.

11. Arrangement according to one of the preceding claims,
**characterized in that**
the control device is configured in such a way that it generates control signals for the frequency converters using a sine-triangle method.

12. Arrangement according to one of the preceding claims,
**characterized in that**
the frequency converters are connected to a line transformer (120) on the system side, which line transformer has at least two secondary-side winding systems (121, 122, 123) which are electrically isolated from one another, wherein the at least two frequency converters are connected to different ones of the at least two secondary-side winding systems which are electrically isolated from one another.

13. Arrangement according to one of the preceding claims,
**characterized in that**
the control device is configured in such a way that it distributes the electrical losses occurring in the frequency converters equally, at least approximately equally, among the frequency converters.

14. Arrangement according to one of the preceding claims,
**characterized in that**
the control device is configured in such a way that it regulates the circulating currents which occur between the frequency converters.

15. Arrangement according to one of the preceding claims,
**characterized in that**
the generator comprises a rotor and a stator,
- wherein the stator has at least two stator modules which are electrically independent of one another and which each interact with the rotor,
- wherein each of the stator modules comprises in each case at least one module-specific magnet and at least one winding, through which at least some of the magnetic flux of the magnet flows, and each of the stator modules with the rotor forms in each case one module-specific magnetic circuit,
- wherein, in the event of a relative movement between the rotor and the stator, each stator module generates a module-specific output voltage,
- wherein the windings of the stator modules are floating and electrically isolated from one another, and
- wherein the at least two frequency converters are connected on the generator side directly or indirectly to the floating and electrically isolated windings of the stator modules.

## Revendications

1. Système (10) destiné à injecter de l'énergie électrique dans un réseau d'alimentation en énergie (100), dans lequel
- le système comporte un générateur (20) muni d'un système d'enroulement à enroulements séparés en potentiel (30),
- le système comporte au moins deux convertisseurs de fréquence (40, 41, 42) munis de circuits intermédiaires séparés (60), dans lequel chaque convertisseur de fréquence est connecté indirectement ou directement à un système d'enroulement (30) du générateur,
- le système comporte au moins un dispositif de commande (80) auquel sont connectés les convertisseurs de fréquence afin de commander ces derniers, et
- les convertisseurs de fréquence injectent un courant au moyen d'une tension présentant une caractéristique multiniveaux dans le réseau d'alimentation en énergie (100) lors de la commande effectuée par le dispositif de commande,
- dans lequel les au moins deux convertisseurs de fréquence (40, 41, 42) génèrent respectivement une tension partielle et
- dans lequel la tension présentant une caractéristique multiniveaux est formée à partir des tensions partielles des au moins deux convertisseurs de fréquence.

2. Système selon la revendication 1, **caractérisé en ce que**
- la tension présentant une caractéristique multiniveaux est formée à partir des tensions partielles des au moins deux convertisseurs de fréquence par intégration d'une addition vectorielle de vecteurs tension des tensions partielles ou de vecteurs de tension qui sont proportionnels aux vecteurs de tension des tensions partielles.

3. Système selon l'une quelconque des revendications précédentes, **caractérisé en ce que**
le dispositif de commande commande les convertisseurs de fréquence de manière à ce que la tension présentant une caractéristique multiniveaux, qui est formée à partir des tensions partielles des convertisseurs de fréquence, corresponde le mieux possible ou au moins de manière approximative à la tension secteur du réseau d'alimentation en énergie (100).

4. Système selon la revendication 3,
**caractérisé en ce que** la tension présentant une caractéristique multiniveaux s'écarte de la tension secteur dans une mesure telle qu'une injection de puissance active et réactive est effectuée dans le réseau d'alimentation en énergie.

5. Système selon l'une quelconque des revendications précédentes,
**caractérisé en ce que** le dispositif de commande détermine les états de commutation des convertisseurs de fréquence individuels.

6. Système seront la revendication 5,
**caractérisé en ce que** le dispositif de commande détermine les états de commutation des convertisseurs de fréquence individuels à l'aide d'un modulateur PWM multiniveaux comportant au moins trois niveaux.

7. Système selon l'une quelconque des revendications précédentes, **caractérisé en ce que**
- les au moins deux convertisseurs de fréquence comportent respectivement un redresseur (50), un circuit intermédiaire à tension continue (60) et un onduleur (70),
- les redresseurs et les circuits intermédiaires à tension continue des au moins deux convertisseurs de fréquence sont séparés électriquement les uns des autres, et
- le dispositif de commande est connecté aux onduleurs des convertisseurs de fréquence.

8. Système selon l'une quelconque des revendications précédentes,
**caractérisé en ce que** le dispositif de commande est conçu de manière à ce qu'il commande les convertisseurs de fréquence à l'aide de signaux de commande individuels modulés en largeur d'impulsion.

9. Système selon des revendications précédentes,
**caractérisé en ce que** le dispositif de commande est conçu de manière à ce qu'il commande les signaux de commande destinés aux convertisseurs de fréquence conformément à un procédé à base de vecteurs spatiaux ou à un procédé à base de supports.

10. Système selon la revendication 9,
**caractérisé en ce que** le dispositif de commande est conçu de manière à ce qu'il génère, conformément au procédé à base de support, des signaux de support qui ne présentent aucun déphasage, afin de générer la tension multiniveaux.

11. Système selon l'une quelconque des revendications précédentes,
**caractérisé en ce que** le dispositif de commande est conçu de manière à ce qu'il génère les signaux de commande destinés aux convertisseurs de fréquence conformément à un procédé de type sinusoïdaltriangulaire.

12. Système selon l'une quelconque des revendications précédentes,
**caractérisé en ce que** les convertisseurs de fréquence sont connectés, côté réseau, à un transformateur de réseau (120) qui possède au moins deux systèmes d'enroulements (121, 122, 123) séparés les uns des autres en potentiel et disposés côté secondaire, dans lequel les au moins deux convertisseurs de fréquence sont connectés à des systèmes d'enroulements différents des au moins deux systèmes d'enroulements séparés les uns des autres en potentiel et situés côté secondaire.

13. Système selon l'une quelconque revendication précédente,
**caractérisé en ce que** le dispositif de commande est conçu de manière à ce qu'il répartisse les pertes électriques apparaissant dans les convertisseurs de fréquence de manière identique ou au moins approximativement identique, entre les convertisseurs de fréquence.

14. Système selon l'une quelconque des revendications précédentes,
**caractérisé en ce que** le dispositif de commande est conçu de manière à ce qu'il régule les courants circulaires qui apparaissent entre les convertisseurs de fréquence.

15. Système selon l'une quelconque des revendications précédentes,
**caractérisé en ce que** le générateur comprend un rotor et un stator,
- dans lequel le stator comporte au moins deux modules de stator électriquement indépendants les uns des autres, qui coopèrent respectivement avec le rotor,
- dans lequel chacun des modules de stator comprend au moins un aimant propre au module et au moins un enroulement qui est traversé par au moins une partie du flux magnétique de l'aimant et dans lequel chacun des modules de stator forme respectivement avec le rotor un circuit magnétique propre au module,
- dans lequel, dans le cas où il se produit un mouvement relatif entre le rotor et le stator, chaque module de stator génère une tension de sortie propre au module,
- dans lequel les enroulements des modules de stator sont exempts de potentiel et sont séparés les uns des autres en potentiel et
- dans lequel les au moins deux convertisseurs de fréquence, côté générateur, sont connectés indirectement ou directement aux enroulements du module de stator qui sont exempts de potentiel et séparés les uns des autres en potentiel.
